# EUROPEAN PATENT APPLICATION

(11) **EP 4 670 878 A1**
(43) Date of publication of application: **31.12.2025**
(21) Application number: 24185198.9
(22) Date of filing: 28.06.2024
(51) Int. Cl.: B23B 27/14

(54) **A CUTTING INSERT FOR TURNING AND A TURNING TOOL**

(71) Applicant: AB Sandvik Coromant, 811 81 Sandviken (SE)
(72) Inventor: Wikblad, Krister, Sandviken (SE); Löf, Ronnie, Sandviken (SE); Wickström, David, Sandviken (SE)
(74) Representative: Sandvik

(57) **Abstract**

The invention relates to a cutting insert (1) for a turning tool, the cutting insert comprising:
- a first surface (2) and a second surface (3), wherein the first and second surfaces are arranged opposite each other and facing opposite directions;
- a peripheral surface (4) connecting the first surface (2) and the second surface (3),
wherein an intersection between the first surface and the peripheral surface forms an edge that includes six side edges (5) connected via six corner edges (6) that are arranged pairwise opposite each other, wherein, of each of the pairs of opposite corner edges one corner edge is a minor corner edge (6a) and the other corner edge is a major corner edge (6b), wherein the corner edges (6) are arranged such that the minor corner edges (6a) and the major corner edges (6b) are alternately arranged along the edge. In a plan view of the first surface (2), each corner edge (6) is formed by one or more curvilinear segments, wherein each major corner edge (6b) has a first length of extension (L1) and each minor corner edge (6a) has a second length of extension (L2), and wherein any two adjacent side edges (5) that are connected via one of the major corner edges (6b) forms a first internal angle (α) with respect to each other, and any two adjacent side edges (5) that are connected via one of the minor corner edges (6a) forms a second internal angle (β) with respect to each other. The first length of extension (L1) is greater than the second length of extension (L2) and the second internal angle (β) is greater than the first internal angle (α).

## Description

### TECHNICAL FIELD

The invention relates to metal cutting, and in particular to turning operations wherein a turning tool is used for machining a rotating workpiece.

### BACKGROUND ART

Within the field of metal cutting, a turning tool may be used for machining the surface of a rotating workpiece.

A cutting insert, for example made of cemented carbide or some other wear resistant material, is commonly arranged at the front of a turning tool. Cutting inserts often include multiple cutting edges, such that the cutting insert is indexable, i.e., such that different cutting edges can be positioned in active or inactive positions depending on how the cutting insert is mounted in the insert seat.

Longitudinal external turning is often performed by cutting inserts having cutting edges forming an entering angle (the angle between the cutting edge and the feed direction) that is close to 90°. However, other approaches have been suggested wherein a much smaller entering angle is used. As an example, EP3359321 B1 discloses cutting inserts and methods wherein an entering angle below 45° is used. With such solutions, the chips from the machined workpiece will be wider and thinner, and the tool wear may be reduced, even if using a higher feed. The cutting inserts suggested in EP3359321 B1 work well in many situations where a small entering angle is desired. However, the cutting inserts are not particularly versatile, but designed for specific applications and cutting directions, and the strength of the inserts may not be satisfactory for some applications.

Hence, there is a need for improved cutting inserts for turning that are versatile and strong.

### SUMMARY

It is an object of the present invention to mitigate the shortcomings of the prior art and to provide a cutting insert suitable for turning using small entering angles and that is both strong and versatile. Another object is to provide such turning insert with a long tool life. Another object is to provide a cutting insert that can be used without being damaged also in operations where the cutting depth may vary during the cut. Another object is to provide a turning insert that is easy to securely mount in an insert seat of a turning tool. Another object is to provide a turning tool that is versatile with respect to different kinds of machining operations and/or feed directions, i.e., not favoring any specific cutting direction.

Thus, according to a first aspect, the invention relates to a cutting insert for a turning tool, the cutting insert comprising:
- a first surface and a second surface, wherein the first and second surfaces are arranged opposite each other and facing opposite directions; and
- a peripheral surface connecting the first surface and the second surface.

An intersection between the first surface and the peripheral surface forms an edge that includes six side edges connected via six corner edges that are arranged pairwise opposite each other. In other words, the six side edges and the six corner edges are arranged alternately such that the corner edges are located pairwise opposite each other. Of each of the pairs of opposite corner edges one corner edge is a minor corner edge and the other corner edge is a major corner edge. The corner edges are arranged such that the minor corner edges and the major corner edges are alternately arranged along the edge. In a plan view of the first surface, each corner edge is formed by one or more curvilinear segments, wherein each major corner edge has a first length of extension, and each minor corner edge has a second length of extension. Any two adjacent side edges that are connected via one of the major corner edges forms a first internal angle with respect to each other, and any two adjacent side edges that are connected via one of the minor corner edges forms a second internal angle with respect to each other. The first length of extension is greater than the second length of extension and the second internal angle is greater than the first internal angle.

Since the first length of extension is greater than the second length of extension, the major corner edges will be less sharp than the minor corner edges. Thereby, if using one of the minor corner edges as front corner edge for a longitudinal turning operation, the cutting insert will be very robust and insensitive to sudden changes of the cutting depth due to the non-sharp profile of the adjacent major corner edge.

A front corner edge, as used herein, should be understood as the corner edge that, when the cutting insert is arranged in a turning tool body, is located most forward, in front of the other corner edges, in relation to the extension of the turning tool body. Thus, the front corner edge corresponds to the main cutting edge (surface generating cutting edge) in a longitudinal turning operation.

Accordingly, if using one of the minor corner edges as main cutting edge in a longitudinal turning operation, it would be possible to maintain the feed also when approaching a shoulder since the major corner edge - if running into excessive workpiece material - is less likely to be damaged. The cutting insert is therefore also suitable when machining in a pocket or similar, against a wall on the workpiece. This is partly because a non-sharp corner is stronger than a sharp corner, but also since such smooth corner will result in a thinner chip being cut, and the chip thickness will vary smoothly along the corner edge. Thereby, the generated forces and temperature increase will be less concentrated. A non-sharp corner will also result in a better (smoother) surface on such generated wall on the workpiece.

The cutting insert may be used for longitudinal turning in any of two opposite feed directions, at least if the cutting insert is arranged symmetrically with respect to the turning tool body, i.e., in a position not favoring any particular cutting direction. With the cutting insert arranged in such way, and with one of the minor corner edges arranged as front cutting edge, the cutting insert may also be used for a facing operation, i.e., wherein the feed direction is perpendicular to the rotation axis of the workpiece being machined, using any of the major corner edges adjacent the front corner edge as main cutting edge. Hence, with the cutting insert arranged in such way, the insert may be used for longitudinal turning in two opposite feed directions and also for facing, wherein facing is possible using the major corner edge on either side of the front corner edge, for example in order to machine in a pocket or on two opposite faces of a machined component.

In general, the cutting insert is particularly well suited for operations where varying cutting depths can be expected.

Hence, the cutting insert as disclosed herein is very versatile and robust and insensitive to varying cutting depths during machining.

Moreover, the cutting insert is well adapted for being securely mounted in an insert seat of a turning tool body because of the angle formed between the two side edges connected by the corner edge that is opposite to the front corner edge, which enables a neutral position of the cutting insert in the tool body, not favoring a specific cutting direction.

The first surface of the cutting insert includes a rake face, and the peripheral surface includes a clearance face, wherein a cutting edge is formed at the intersection therebetween.

The whole edge formed by the intersection between the first surface and the peripheral surface may correspond to the cutting edge. In other words, all parts of the edge may be configured to act as a cutting edge. Hence, the rake face and the clearance face may extend on the first surface and the peripheral surface, respectively, all along the edge. Which parts of the edge that will correspond to an active cutting edge, i.e., the cutting edge that is currently arranged for cutting, depends on how the cutting insert is mounted in the insert seat of the turning tool and on what kind of cutting operation that is performed. The active cutting edge includes at least a part of the corner edge currently used as main cutting edge. The active cutting edge may also include at least a part of one of the side edges connected to such corner edge.

The cutting insert may be indexable, e.g., such that the cutting insert can be mounted in the insert seat in multiple different orientations, for example with any of the minor corner edges arranged as a front corner edge. With a cutting insert geometry as disclosed herein, the cutting insert may be indexable in three positions in the same insert seat. Thereby, the tool life of the cutting insert is increased compared to a cutting insert that is indexable in only two positions. The cutting insert may be single sided or double sided. In the latter case, a cutting edge will be formed also at the intersection between a rake face on the second surface and a clearance face on the peripheral surface. Such cutting edge may correspond completely to the cutting edge formed at the intersection between the rake face on the first surface and the clearance face on the peripheral surface. In effect, such double sided cutting insert may be indexed twice as many times as a corresponding single sided cutting insert.

According to some embodiments, the cutting insert may be a positive insert, wherein the peripheral surface forms an angle to the first surface less than 90°, i.e., the peripheral surface slopes away from the first surface to the second surface to provide additional clearance when cutting. Such positive cutting insert is usually single sided.

The cutting insert may include a central hole, extending centrally through the cutting insert, along a central axis of the cutting insert extending from the first surface to the second surface. In other words, a central axis of the cutting insert may extend centrally along the extension of such hole. The hole may be used when mounting the cutting insert within an insert seat of a turning tool body by using a fasting element, such as a screw.

The cutting insert may be made from a wear resistant material, such as cemented carbide. The cutting insert may be non-coated or coated with thin layer of a different material.

The length of extension of each major corner edge is greater than the length of extension of each minor corner edge, and, consequently, the combined length of extension of the major corner edges is greater than the combined length of extension of the minor corner edges. All major corner edges may have mutually corresponding lengths of extension, and all minor corner edges may have mutually corresponding lengths of extension. Moreover, all the side edges may have mutually corresponding lengths of extension.

The edge formed by the intersection between the first surface and the peripheral surface may be located in a plane that is perpendicular to a central axis of the cutting insert, or, in other words, located in a plane that is parallel to a plane in which the first surface generally extends. Hence, when seen in a side view of the cutting insert, i.e., a view towards the peripheral surface of the cutting insert along a direction perpendicular to the central axis of the cutting insert, the edge may be straight and extend perpendicularly to the central axis. However, for some embodiments it is also envisaged that the edge, in such side view, may be curvilinear and/or extend in a different direction with respect to the central axis. As used herein, any references to the characteristics and extension of the side edges and corner edges are made with respect to a plan view of the first surface of the cutting insert, i.e., as seen from a direction along the central axis towards the first surface.

Each corner edge is formed by one or more curvilinear segments. For example, each corner edge may be formed by one or more circular segments having certain radii of curvature. One or more of the curvilinear segments may also be differently curved, for example corresponding to an elliptical segment. A corner edge may be formed by a single circular segment having a constant radius of curvature, or by a single elliptical segment. Alternatively, a corner edge may be formed by multiple such segments having different curvatures, but the corner edges are not wave-shaped or have an otherwise periodically changing configuration. In other words, each corner edge may be strictly convex in a plan view of the first surface.

The side edges may be straight, i.e., rectilinear, or substantially rectilinear.

The transition between a corner edge and a connected side edge is preferably smooth. In other words, each of the side edges may extend, in relation to a curvilinear corner edge connected therewith, along a tangent to the corner edge at the point where the corner edge transitions into the side edge.

According to some embodiments, the first length of extension (the length of extension of a major corner edge) may be at least two times greater than the second length of extension (the length of extension of a minor corner edge). For example, the first length of extension may be in a range of 2-8 times greater.

According to some embodiments, the first length of extension is at most 20 times greater than the second length of extension.

A too great length of extension of the major corner edges may result in side edges that are very short, which might not be desirable for many applications. A first length of extension that is less than 20 times the second length of extension may ensure that each of the side edges has a sufficient length of extension.

According to some embodiments, the first length of extension is at least 5% of the total length of extension of the edge when seen in a plan view of the first surface. Hence, the major corner edges constitute a significant part of the total extension of the edge. As a consequence, each major corner edge can have a rounded off or blunt shape and form a smooth transition between the two side edges connected by the corner edge.

The first length of extension may be within a range of 5-20% of the total length of extension of the edge. For example, the first length of extension may be about 10% of the total length of extension of the edge.

According to some embodiments, the second internal angle is greater than 120° and at most 160°. The second internal angle, which is supposed to be greater than the first internal angle, must obviously be above 120° since a second internal angle of 120° would correspond to the first internal angle also being 120°. Moreover, a second internal angle greater than 160° (corresponding to the first internal angle being smaller than 80°), may result in a non-optimal cutting geometry since this would provide an entering angle below 10° which may result in too wide chips and thus reduced chip control, and the risk of vibration would increase.

According to some embodiments, the second internal angle is within a range of 130°-155°, such as, for example, 135° or 150°.

According to some embodiments, the one or more curvilinear segments of each major corner edge is a single circular segment having a first radius of curvature. Such first radius of curvature may correspond to at least 4 % of the total length of extension of the edge when seen in a plan view of the first surface. Thereby, each major corner edge may form a very smooth (rounded off) transition between the two side edges connected by the major corner edge. An alternative way to express the dimension of the first radius of curvature is in relation to a minimum radial distance from a central axis of the cutting insert to the edge. According to some embodiments, the first radius of curvature may be at least 30% of the minimum radial distance from the central axis of the cutting insert to the edge.

According to some embodiments, also the one or more curvilinear segments of each minor corner edge is a single circular segment having a second radius of curvature. The first radius of curvature may be greater than the second radius of curvature, for example at least two times greater, such that each minor corner edge forms a relatively sharper (abrupt) transition between the two side edges connected by the corner edge. For example, the second radius of curvature may be selected such that each minor corner edge is sufficiently strong while also well adapted for generating a high-quality surface in a longitudinal turning operation and facilitating a design wherein the adjacent side edges have a sufficient length of extension.

In some embodiments, the one or more curvilinear segments of each minor corner edge includes a wiper segment. As is well-known in the art, a wiper edge, or a wiper segment of a cutting edge, is formed by one or more large radiused curvilinear segments following a nose cutting edge and that "wipes" the surface behind such nose cutting edge, resulting in a better surface finish by smoothing out the scallops in the machined surface. As used herein, such wiper segment is considered as a part of the corner edge.

Even if each minor corner edge thus may include multiple curvilinear segments, such as circular segments of different radii of which some segments, in particular a wiper segment, even may have a greater radius of curvature than the major corner edges, the length of extension of each minor corner edge (i.e., the combined lengths of all such curvilinear segments) will still be smaller than the length of extension of each major corner edge.

For each corner edge that comprises multiple curvilinear segments of different curvature, the curvilinear segments that connect to respective side edges on either side of the corner edge may have a smaller radius of curvature than at least some of, and for example all of, the other intermediary curvilinear segments of the corner edge.

According to another aspect, the invention relates to a turning tool comprising a cutting insert according to any of the embodiments described herein. The turning tool comprises a tool body having a front end and an opposite rear end and a main extension along a longitudinal axis extending from the front end to the rear end. An insert seat is formed in the front end, and the turning insert is mountable in the insert seat with one of its minor corner edges arranged as a front corner edge located in front of the other corner edges. According to some embodiments, the insert seat is arranged such that, when the cutting insert is mounted in the insert seat, a bisector of the front corner edge is parallel, or substantially parallel, to the longitudinal axis of the tool body when seen in a plan view of the first surface of the cutting insert.

The front corner edge corresponds to the corner edge currently arranged as main cutting edge for longitudinal turning. With an arrangement wherein the bisector of the front corner edge is parallel to the longitudinal axis of the tool body, the turning tool is equally suitable for longitudinal turning in any of two opposite directions, and the arrangement does not favor any particular feed direction.

### BRIEF DESCRIPTION OF DRAWINGS

The solution will now be described in more detail by means of exemplary embodiments and with reference to the accompanying drawings, in which:
Fig. 1 is a perspective view of a cutting insert according to an embodiment.
Fig. 2 is a plan view of the first surface of the cutting insert in Fig. 1.
Fig. 3 is a side view of the cutting insert as seen from the direction III indicated in Fig. 2.
Fig. 4 is a side view of the cutting insert as seen from the direction IV indicated in Fig. 2.
Fig. 5 shows a turning tool according to a first embodiment including a tool body and a cutting insert according to Figs. 1-4
Fig. 6 illustrates the turning tool according to the first embodiment engaged in a longitudinal turning operation.
Fig. 7 shows a turning tool according to a second embodiment.
Fig. 8 is a different view of the turning tool according to the second embodiment.
Fig. 9 illustrates the turning tool according to the second embodiment engaged in a longitudinal turning operation along a first feed direction.
Fig. 10 illustrates the turning tool according to the second embodiment engaged in a longitudinal turning operation along a second feed direction.
Fig. 11 illustrates the turning tool according to the second embodiment engaged in a facing operation along a third feed direction, using one of the major corner edges.
Fig. 12 is similar to Fig. 11 and illustrates the turning tool according to the second embodiment engaged in a facing operation along the third feed direction, using another of the major corner edges.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

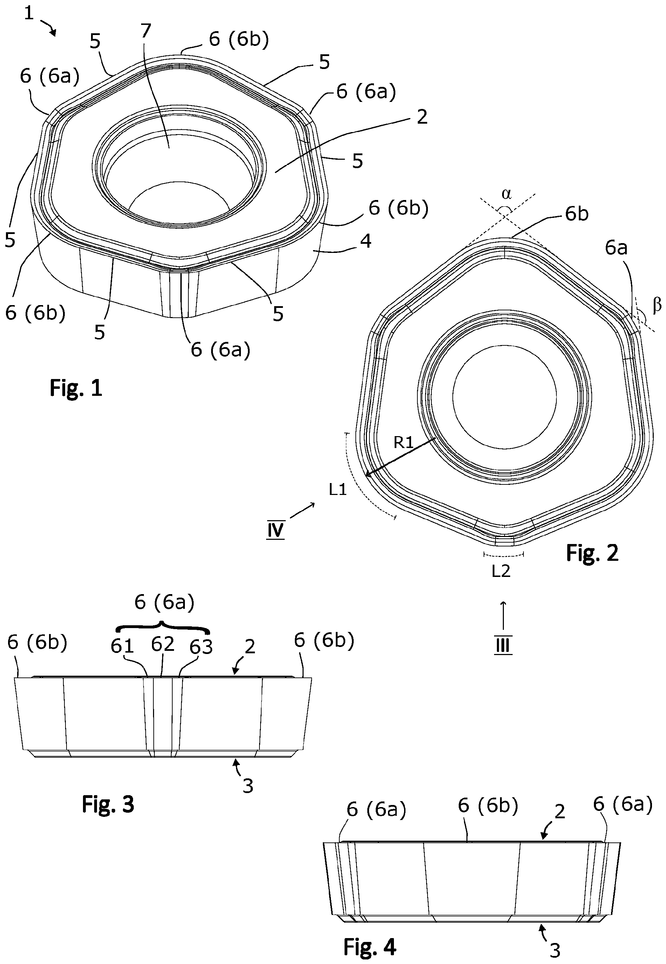

Figs. 1-4 illustrate a cutting insert 1 comprising a first surface 2 and a second surface 3, wherein the first and second surfaces 2,3 are arranged opposite each other and facing opposite directions. A peripheral surface 4 connects the first surface 2 and the second surface 3. An edge is formed by an intersection between the first surface 2 and the peripheral surface 4. The edge includes six side edges 5 connected via six corner edges 6 arranged pairwise opposite each other. Each pair consists of a minor corner edge 6a and a major corner edge 6b. Accordingly, there are three minor corner edges 6a and three major corner edges 6b alternately arranged along the edge. When seen in a plan view of the first surface 2, as shown in Fig. 2, each corner edge is formed by curvilinear segments. Each major corner edge 6b is formed by a single circular segment having a first radius of curvature R1. Each minor corner edge 6a is formed by three curvilinear segments 61, 62, 63. The outer curvilinear segments 61, 63 that are connected to respective side edges 5 on either side of the minor corner edge 6a have a quite small radius of curvature, less than half of the first radius of curvature R1. The intermediary curvilinear segment 62, on the other hand, has a large radius of curvature, about two times greater than the first radius of curvature R1. The intermediary curvilinear segment 62 thereby forms a wiper segment.

The side edges 5 are rectilinear. Each major corner edge 6b has a first length of extension L1 that in the illustrated embodiment is about three times greater than a second length of extension L2 of each of the minor corner edges 6a. In this case the first length of extension L1 corresponds to about 10% of the total length of the edge.

Two side edges 5 connected by a major corner edge 6b forms a first internal angle α with respect to each other, whereas two side edges 5 connected by a minor corner edge 6a forms a second internal angle β with respect to each other. In the illustrated embodiment, the first internal angle α is 105° and the second internal angle β is 135°.

A hole 7 extends through the cutting insert 1 and is used for mounting the cutting insert in an insert seat of a turning tool body, for example using a screw.

As best seen in Figs. 3 and 4, the cutting insert 1 is of the positive type. Hence, the cutting insert is single sided, with no cutting edges on the intersection between the second surface 3 and the peripheral surface 4.

The cutting insert 1 is indexable and can be placed in an insert seat of a turning tool body in three different positions as will be described in more detail below.

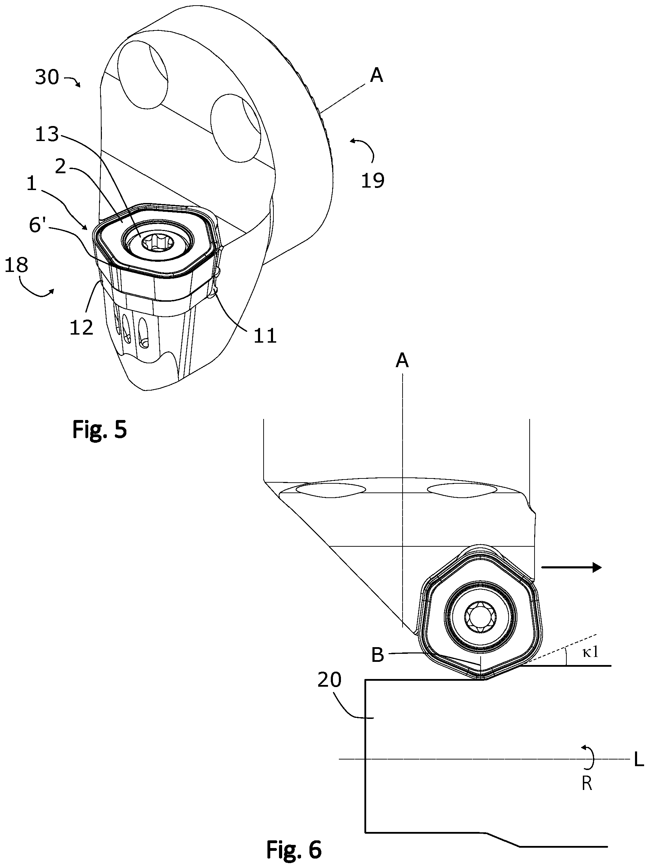

Figs. 5-6 illustrate a turning tool comprising a turning tool body 30 and the cutting insert 1 shown in Figs. 1-4. The turning tool body 30 has a front end 18 and an opposite rear end 19. In this embodiment, the turning tool body 30 corresponds to a cutting head of a modular tool and is configured to be attached, via an interface or a coupling portion at the rear end 19, to an adapter (not shown) that is mountable to a machine tool. The tool body 30 has a main extension along a longitudinal axis A extending from the front end 18 to the rear end 19. The longitudinal axis A is a geometrical center axis of the coupling portion at the rear end 19. An insert seat 11 is formed in the front end 18. In this case, the insert seat includes a shim 12 on which the second surface 3 of the cutting insert 1 rests. The cutting insert 1 is fixed within the insert seat 11 using a screw 13 extending through the hole 7 in the cutting insert 1 and into a threaded hole (not shown) in the insert seat 11. When the cutting insert 1 is mounted in the insert seat 11, one of the minor corner edges 6a is arranged as a front corner edge 6' that is located in front of the other corner edges. The cutting insert 1 is indexable and may thus be relocated within the insert seat by being rotated 120° and then fixed again using the screw 13, such that one of the other minor corner edges 6a is arranged as front corner edge 6' .

Fig. 6 illustrates the turning tool in a longitudinal turning operation when machining a workpiece 20 that rotates around a rotation axis L in a rotation direction R. The resulting entering angle κ1 is in this case 22.5°.

The insert seat 11 is arranged in the tool body 10 such that a bisector B (illustrated in Fig. 6) of the front corner edge 6' is parallel to the longitudinal axis A of the tool body, when seen in a plan view of the first surface 2 of the cutting insert 1. As a consequence, the turning tool can be used for machining in two opposite feed directions. However, the insert seat 11 has an eccentric location in the tool body 30, i.e., wherein the bisector B does not coincide with the longitudinal axis A, and thereby provides an additional support surface for the cutting insert 1 extending in a direction such that a feed direction as shown by an arrow in Fig. 6 is particularly suitable.

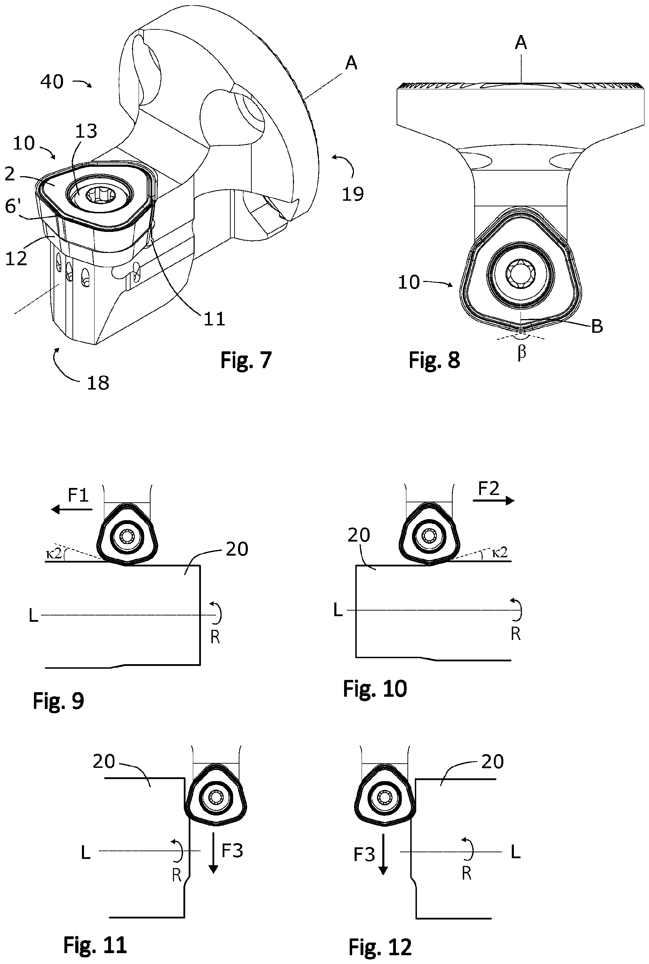

Figs. 7-12 illustrate another embodiment of a turning tool comprising a cutting insert 10 mounted in a turning tool body 40. The insert seat 11 of the tool body 40 is centrally arranged such that a bisector B of the front corner edge 6' (illustrated in Fig. 8) is not only parallel to, but also coincides with, the longitudinal axis A of the tool body 40 when seen in a plan view of the first surface 2 of the cutting insert 10. As seen in the Figs. 7-12, the cutting insert 10 is only supported along two of the side edges 5. Such support is sufficient for most applications and has the further benefit of improved accessibility, for example when machining within a recess in the workpiece, and it will be possible to perform facing on any of two opposite sides of a workpiece.

The only difference between the cutting insert 10 shown in Figs. 7-12 and the cutting insert 1 shown in Figs 1-6, is that the first internal angle α is 90° and the second internal angle β is 150°.

Fig. 9 illustrates the turning tool during a longitudinal turning operation along a feed direction F1 when machining a workpiece 20 that rotates around a rotation axis L in a rotation direction R. With the cutting insert 10, the resulting entering angle κ2 is 15°.

Due to the symmetric arrangement of the cutting insert 1 in the tool body 10, the turning tool is equally well suited for machining in an opposite feed direction F2, as illustrated in Fig. 10. Moreover, with the cutting insert 1 arranged in this way, the turning tool may also be used for facing operations in a feed direction F3, towards the workpiece axis L, using any of the major corner edges adjacent the front corner edge 6', as illustrated in Figs. 11-12.

## Claims

1. A cutting insert (1) for a turning tool, the cutting insert comprising:
- a first surface (2) and a second surface (3), wherein the first and second surfaces are arranged opposite each other and facing opposite directions;
- a peripheral surface (4) connecting the first surface (2) and the second surface (3),
wherein an intersection between the first surface and the peripheral surface forms an edge that includes six side edges (5) connected via six corner edges (6) that are arranged pairwise opposite each other, wherein, of each of the pairs of opposite corner edges one corner edge is a minor corner edge (6a) and the other corner edge is a major corner edge (6b), wherein the corner edges (6) are arranged such that the minor corner edges (6a) and the major corner edges (6b) are alternately arranged along the edge, and wherein, in a plan view of the first surface (2), each corner edge (6) is formed by one or more curvilinear segments, wherein each major corner edge (6b) has a first length of extension (L1) and each minor corner edge (6a) has a second length of extension (L2), and wherein any two adjacent side edges (5) that are connected via one of the major corner edges (6b) forms a first internal angle (α) with respect to each other, and any two adjacent side edges (5) that are connected via one of the minor corner edges (6a) forms a second internal angle (β) with respect to each other, **characterized in that** the first length of extension (L1) is greater than the second length of extension (L2) and the second internal angle (β) is greater than the first internal angle (α).

2. The cutting insert according to claim 1, wherein the first length of extension (L1) is at least two times greater than the second length of extension (L2).

3. The cutting insert according to any of the previous claims, wherein the first length of extension (L1) is at most 20 times greater than the second length of extension (L2).

4. The cutting insert according to any of the previous claims, wherein the first length of extension (L1) is at least 5% of a total length of extension of the edge when seen in a plan view of the first surface (2).

5. The cutting insert according to any of the previous claims, wherein the second internal angle (β) is greater than 120° and smaller than 160°.

6. The cutting insert according to any of the previous claims, wherein the one or more curvilinear segments of each major corner edge (6b) is a single circular segment having a first radius of curvature (R1).

7. The cutting insert according to claim 6, wherein the first radius of curvature (R1) is at least 4 % of the total length of extension of the edge when seen in a plan view of the first surface.

8. The cutting insert according to any of the previous claims, wherein the one or more curvilinear segments of each minor corner edge (6a) includes a wiper segment (62).

9. A turning tool comprising a cutting insert (1, 10) according to any of the previous claims, wherein the turning tool comprises a tool body (30, 40) having a front end (18) and an opposite rear end (19) and a main extension along a longitudinal axis (A) extending from the front end (18) to the rear end (19), wherein an insert seat (11) is formed in the front end (18), and wherein the cutting insert (1, 10) is mounted in the insert seat (11) with one of the minor corner edges (6a) arranged as a front corner edge (6') located in front of the other corner edges.

10. A turning tool according to claim 8, wherein the insert seat (11) is arranged such that, when the cutting insert (1, 10) is mounted in the insert seat (11), a bisector (B) of the front corner edge (6') is parallel, or substantially parallel, to the longitudinal axis (A) when seen in a plan view of the first surface (2) of the cutting insert (1, 10).
